# EUROPEAN PATENT SPECIFICATION

(11) **EP 1 360 905 B1**
(45) Date of publication and mention of the grant of the patent: **09.05.2007**
(21) Application number: 03004050.5
(22) Date of filing: 25.02.2003
(51) Int. Cl.: A23L 1/19

(54) **Non-Dairy Cream**
Nicht-Milch Sahne
Crème non laitière

(30) Priority: 17.04.2002 EP 02252705
(43) Date of publication of application: 12.11.2003
(73) Proprietor: UNILEVER N.V., 3013 AL Rotterdam (NL); UNILEVER PLC, London EC4P 4BQ (GB)
(72) Inventor: Bot, Arjen, 3133 AT Vlaardingen (NL); Brockhus, Jeroen Johannes, 3071 JL Rotterdam (NL); den Hartog, Sandra, 3133 AT Vlaardingen (NL)
(74) Representative: Joppe, Hermina Laura Petronella

(56) References cited:
- EP-A- 0 454 195
- EP-A- 0 455 288
- EP-A- 0 540 085
- EP-A- 0 540 086
- EP-A- 0 540 087
- EP-A- 0 807 385
- DE-A- 1 692 584
- GB-A- 1 134 837
- US-A- 3 716 377
- NEWSTEAD D.F., GOLDMANN A.: "Recombined milk and creams" INTERNATIONAL DAIRY FEDERATION BULLETIN, 1979, pages 7-13, XP001152664 ISSN: 0250-5118
- WEBB B H ET AL: "BUTTERMILK" , BYPRODUCTS FROM MILK, WESTPORT, AVI PUBL, US, PAGE(S) 17-18 XP002027954 * the whole document *

## Description

### Field of the invention

The invention relates to non-dairy creams which are emulsions comprising a continuous aqueous phase and a dispersed fat phase. The aqueous phase generally contains one or more milk components. The emulsion is generally stabilised by emulsifiers and/or thickeners.

### Background to the invention

Non-dairy creams are emulsions of a water continuous phase and a dispersed fat phase, which is essentially based on vegetable fat. Non-dairy creams are known in several physical forms such as whippable creams, pourable cooking cream, spoonable cream.

Non-dairy creams have been developed with the aim to replace the original dairy cream by a more healthy, and often less costly alternative. Fats rich in polyunsaturated fatty acids are generally thought to contribute to an essential part of a healthy diet. Dairy products which usually show a high butter fat content are consumed at a lower rate since several decades whereby their consumption is often "saved" for indulgence occasions. Therefore there is a long standing desire for non-dairy creams to replace the dairy products whippable cream, creme fraiche, cooking creams and the like. In the development of suitable replacements it was found that the presence of proteins derived from dairy products contributes to a great extent to the dairy connotation of non-dairy creams which are based on vegetable oils.

EP-A-469656 discloses whippable non-dairy creams that have a high content in liquid oils. The non-dairy cream according to EP-A-469656 comprises a continuous aqueous phase containing one ore more milk components, preferably butter milk powder (BMP) and thickeners and a fat phase comprising vegetable fat and an emulsifier system, wherein the fat phase is composed of a liquid oil and a hard fat such that the cream is whippable within 6 minutes when using a domestic whipper.

EP-A-540087 discloses a cream comprising about 10% fat, skimmed milk, starch and a thickener. The resulting product shows the desired spoonable rheology.

EP -A-807385 discloses an alternative cream having a level in the range of 0-35% which is pourable, stable at a pH in the range of 3.5-4.5, heat stable and has good shelf life stability. As protein source butter milk powder and whey protein concentrate are used, in addition yoghurt is used for acidifying purposes.

EP-A-540085 discloses stable spoonable non-dairy creams comprising about 30% fat and butter milk powder which is acidified with a culture medium.

EP-A-455288 and EP-A-540086 disclose that it is well known to add some amount of buttermilk component to a non-dairy cream in order to improve the taste.

GB-A-1,134,837 relates to an improved process for the production of a recombined whippable cream or cream-like product. The products are sweet creams that comprise a mixture of buttermilk and skimmed milk ingredients at a preferred ratio of 1-1. This document teaches that improved whipping ability is obtained by addition of buttermilk and related ingredients. This document is silent about acidified non-dairy creams.

Products such as those according to EP-A-469656 and EP-A-455288, which are based on butter milk powder, do show a high quality in terms of dairy taste and flavour. However they were found to show a grainy or sandy mouthfeel when used in certain non-dairy creams, especially in spoonable acidified non-dairy creams such as creme fraiche alternatives. Furthermore butter milk powder when used in high amounts may impart instability to the emulsion which is perhaps advantageous for obtaining whippability but in other cases leads to products which are instable on storage and thus tend to harden and form a two phase system in the package.

EP-A-450087 discloses spoonable products comprising skim milk. Although these products are storage stable they do not impart the desired smooth, soft mouthfeel associated with dairy products.

It is an object of the invention to provide improved acidified non-dairy creams that are storage stable and also show the desired dairy type smooth mouthfeel without being grainy.

### Summary of the invention

It was surprisingly found that a specific ratio of skim milk derived proteins and butter milk derived proteins fulfills this objective for acidified non-dairy creams, especially if a specific fat to skim milk protein ratio is simultaneously adhered to.

Therefore the invention relates to an acidified non-dairy cream with a pH of from 4 to 5.8, comprising an emulsion of a water continuous phase comprising protein components and a thickener, and a fat phase comprising a vegetable fat, the amount of fat being from 5 to 35 wt% on total product weight, and optionally an emulsifier, wherein the amount of protein is from 0.1 to 10 wt%, **characterised in that** at least part of the protein is derived from buttermilk and skim milk wherein the amount of skim milk derived protein is from 10 to 80 wt% on the total amount of protein derived from butter milk and skim milk and wherein the cream comprises fat and skim milk powder, wherein the weight ratio of skim milk powder to fat is between 1 part skim milk powder to 10 parts fat and 5 parts skim milk powder to 10 parts fat.

### Detailed description

A non-dairy cream is defined as a water continuous emulsion comprising a dispersed fat phase wherein the fat is essentially derived from vegetable fat. Preferably the butter fat content is less than 10 wt%, more preferred less than 1 wt% on total fat.

The invention relates to non-dairy creams in any physical form e.g. pourable, whippable, spoonable, squeezable, pumpable.

The non-dairy cream comprises protein derived from buttermilk and protein derived from skim milk. The buttermilk and skim milk from which the protein is derived may be in any suitable physical form such as liquid, paste or powder. In view of process efficiency and supply chain simplicity, the protein is preferably derived from butter milk powder and skim milk powder.

In the context of the invention, the wording "derived from" implies that skim milk respectively butter milk are the source of the protein whereby inherently the other components present in the source are included in the non-dairy cream formulation upon addition of the skim milk source or butter milk source.

Skim milk is the low fat fraction which results after separation of milk in a high fat fraction of about 35% fat (cream) and a low fat fraction (skimmed milk) by centrifugation. The high fat fraction may be further processed into butter and buttermilk. The skimmed milk fraction and buttermilk may be concentrated or powdered.
Buttermilk and skim milk generally comprise fat, protein, vitamins, mineral elements, carbohydrates, cholesterol. The fluid that remains after churning of cream, after all the butterfat has been removed as butter, is similar to skim milk in composition except it contains the phospholipids and proteins from the fat globule membranes.

In preferred products the amount of skim milk derived protein is from 30 to 60 wt%, preferably 30 to 50 wt%, more preferably from 35 to 45 wt% on the total amount of protein derived from butter milk and skim milk.

According to a preferred embodiment of the invention, the non-dairy cream comprises fat and skim milk powder in a weight ratio of skim milk powder to fat of at least 1 part skim milk powder to 10 parts fat, preferably between 1 part skimmed milk powder to 10 parts fat and 5 parts skimmed milk powder to 10 parts fat, more preferred from 2 to 10 to 5 to 10.

In the composition according to the invention, a thickener is present. Preferably the thickener is selected from the group comprising guar gum, locust bean gum, carrageenan, alginate, pectin, tara gum, xanthan gum, starches, methylcellulose, carboxymethylcellulose or a combination thereof.

The preferred level of thickener is from 0.01 to 3 wt%, preferably from 0.2 to 1 wt%.

The amount of protein in the non-dairy cream is from 0.1 to 10 wt%. To prevent the product from imparting a thick, proteinaceous mouthfeel such as given by fresh cheese, the amount of protein is preferably below 10 wt%. More preferred the amount of protein is from 1 to 5 wt%, more preferred from 2 to 5 wt%, even more preferred from 2 to 4 wt%. Optionally besides buttermilk protein and skim milk protein other protein is present, e.g. soy protein.

The amount of skim milk protein is preferably at least 0.6 wt% on total product weight, more preferably from 0.7 to 3 wt%, even more preferred from 0.7 to 1.5 wt%.
The amount of skim milk powder is preferably at least 2 wt% on total product weight, more preferably from 2 to 6 wt%, even more preferred 2 to 4 wt%, most preferred from 2 to 3.5 wt%.

The amount of buttermilk protein is preferably at least 1 wt% on total product weight, more preferred from 1.5 to 3 wt%, even more preferred from 1.5 to 2.5 wt%.
The amount of buttermilk powder is preferably from 3 to 9 wt%, more preferred from 4 to 6 wt%.

Their powders form a preferred source of buttermilk protein and skim milk protein.

The creams are acidified to for example obtain a creme fraiche type composition. Such creams show a pH of from 4 to 5.8, preferably from 4 to 5.4, more preferred 4 to 5.2, which may be reached by chemical or microbial acidification.

Preferably the creams comprise butter milk protein, skim milk protein and some whey protein, either added via the other ingredients or added as such. It was found that the presence of whey protein positively influences the mouthfeel especially for creams that are between pH 5 and 5.4.

Although most of the products according to the invention will show a smooth, non grainy mouthfeel, for some which are e.g. whippable creams formed with relatively high level of BMP, or spoonable creams with a relatively high level of SMP, the potential graininess may be considerably reduced by the addition of a biopolymer such as pectin.
The preferred amount of such biopolymer is 0.05 to 2 wt%.

Optionally the composition comprises an emulsifier. The emulsifier can be one single emulsifier or a combination of several. Preferably the emulsifier is selected from the group comprising monoglycerides, diglycerides, lecithins, polyglycerol esters, DATA-esters, polyoxy sorbitaan esters, citric acid esters or a combination thereof. The preferred amount of emulsifier is from 0.001 to 2 wt%, more preferred from 0.01 to 1 wt%.

The fat is preferably essentially based on vegetable fat. Preferred fats are high in polyunsaturated fats.

Suitable fats are for example selected from the group comprising sunflower oil, coconut oil, palm kernel oil, palm oil fractions safflower oil, rapeseed oil, maize oil, bean oil, ground nut oil, olive oil and cotton seed oil or a combination thereof.
If the cream is to be used as a whippable cream, the inclusion of a small amount of a fat that crystallizes at about 4 to 20 °C is recommendable. To this purpose, e.g. some coconut oil is suitably added.

The cream optionally comprises further ingredients such as colouring agents, flavour (concentrates), salt, sweetener, e.g. sugar, particulates e.g. herbs or a combination thereof.

The creams according to the invention may be prepared by any suitable process. Such processes are for example described in EP-A-469656 and EP-A-540087. In a preferred process the ingredients except for the fat phase are mixed in an aqueous environment at about 40 to 100 °C and cooled to below about 60 °C, followed by mixing with the fat phase, homogenization, cooling, optional acidification, and storage at about 0 to 10 °C.

The invention is illustrated by the following non-limiting examples.

### Example 1-2

A non-dairy cream was prepared comprising the components of table 1.

### Processing:

Water phase and fat phase ingredients except for locust bean gum and acids were mixed at about 60 °C. After mixing the composition was pasteurized at 85°C for 10 minutes, and cooled down to 44°C, after which homogenisation at 200 bar took place. To the homogenized composition acid was added, until a pH of about 4.8 was reached. Subsequently locust bean gum was added, followed by heating the mixture to 85 °C. The obtained product was homogenized at 300 bar, and subsequently heated to a temperature of 75°C for filling small containers. The product was cooled down to below 10°C and stored at chill temperature.

**Table 1**

| ingredient | (1) Wt% on total product weight | (2) Wt% on total product weight |
|---|---|---|
| Fat phase mixture of coconut oil and palm oil fraction. | 20 | 20 |
| Skimmed milk powder | 3 | 2 |
| Butter milk powder | 3.5 | 6.5 |
| Locust bean gum | 0.1 | 0.1 |
| Lactic acid | To pH 4.5 | to pH 4.5 |
| water | Added to 100% | Added to 100% |

The resulting products were acidified spoonable non-dairy creams showing a smooth mouthfeel on consumption. The products were stable upon storage.

## Claims

1. Acidified non-dairy cream with a pH of from 4 to 5.8, comprising an emulsion of a water continuous phase comprising protein components and a thickener, and a fat phase comprising a vegetable fat, the amount of fat being from 5 to 35 wt% on total product weight, and optionally an emulsifier, wherein the amount of protein is from 0.1 to 10 wt%, **characterised in that** at least part of the protein is derived from buttermilk and skim milk wherein the amount of skim milk derived protein is from 10 to 80 wt% on the total amount of protein derived from butter milk and skim milk and wherein the cream comprises fat and skim milk powder, wherein the weight ratio of skim milk powder to fat is between 1 part skim milk powder to 10 parts fat and 5 parts skim milk powder to 10 parts fat.

2. Non-dairy cream according to claim 1 wherein the weight ratio of skim milk powder to fat is from 2 to 10 to 5 to 10.

3. Non-dairy cream according to any of claims 1-2 comprising buttermilk protein, skim milk protein and whey protein.

4. Non-dairy cream according to any of claims 1-3 wherein the protein is derived from skim milk powder and butter milk powder.

5. Non-dairy cream according to any of claims 1-4 wherein the thickener is selected from the group comprising guar gum, locust bean gum, carrageenan, alginate, pectin, tara gum, xanthan gum, starches, methylcellulose, carboxymethylcellulose or a combination thereof.

6. Non-dairy cream according to any of claims 1-5 wherein the amount of protein is from 2 to 5 wt%, more preferred from 2 to 4 wt%.

7. Non-dairy cream according to any of claims 1-6 wherein the amount of skim milk protein is at least 0.6 wt% on total product weight, preferably from 0.7 to 3 wt%.

8. Non-dairy cream according to any of claims 1-7 wherein the source of skim milk protein is skim milk powder and the source of butter milk protein is butter milk powder and wherein the cream comprises a thickener which is a biopolymer, preferably a pectin.

## Patentansprüche

1. Azidifizierte Nicht-Milch-Sahne mit einem pH von 4 bis 5,8, die eine Emulsion aus einer kontinuierlichen Wasserphase, die Proteinkomponenten und ein Verdickungsmittel umfasst, und einer Fettphase, die ein pflanzliches Fett umfasst, wobei die Menge an Fett 5 bis 35 Gew.-%, bezogen auf das Gesamtproduktgewicht, ist, und gegebenenfalls einen Emulgator umfasst, wobei die Menge an Protein 0,1 bis 10 Gew.-% ist, **dadurch gekennzeichnet, dass** wenigstens ein Teil des Proteins von Buttermilch und Magermilch stammt, wobei die Menge an von Magermilch stammendem Protein 10 bis 80 Gew.-%, bezogen auf die Gesamtmenge an Protein, die von Buttermilch und Magermilch stammt, ist, und wobei die Sahne Fett und Magermilchpulver umfasst, wobei das Gewichtsverhältnis von Magermilchpulver zu Fett zwischen 1 Teil Magermilchpulver zu 10 Teilen Fett und 5 Teilen Magermilchpulver zu 10 Teilen Fett liegt.

2. Nicht-Milch-Sahne nach Anspruch 1, wobei das Gewichtsverhältnis von Magermilchpulver zu Fett 2 zu 10 bis 5 zu 10 ist.

3. Nicht-Milch-Sahne nach einem der Ansprüche 1-2, die Buttermilchprotein, Magermilchprotein und Molkeprotein umfasst.

4. Nicht-Milch-Sahne nach einem der Ansprüche 1-3, wobei das Protein aus Magermilchpulver und Buttermilchpulver stammt.

5. Nicht-Milch-Sahne nach einem der Ansprüche 1-4, wobei das Verdickungsmittel ausgewählt ist aus der Gruppe, umfassend Guargummi, Johannisbrotkemgummi, Carrageenan, Alginat, Pektin, Taragummi, Xanthangummi, Stärken, Methylcellulose, Carboxymethylcellulose und einer Kombination davon.

6. Nicht-Milch-Sahne nach einem der Ansprüche 1-5, wobei die Menge an Protein 2 bis 5 Gew.-%, bevorzugter 2 bis 4 Gew.-%, ist.

7. Nicht-Milch-Sahne nach einem der Ansprüche 1-6, wobei die Menge an Magermilchprotein wenigstens 0,6 Gew.-%, bezogen auf das Gesamtproduktgewicht, vorzugsweise 0,7 bis 3 Gew.-%, ist.

8. Nicht-Milch-Sahne nach einem der Ansprüche 1-7, wobei die Quelle für Magermilchprotein Magermilchpulver ist und die Quelle für Buttermilchprotein Buttermilchpulver ist und wobei die Sahne ein Verdickungsmittel umfasst, das ein Biopolymer, vorzugsweise ein Pektin, ist.

## Revendications

1. Crème non laitière acidifiée ayant un pH allant de 4 à 5,8, qui comprend une émulsion constituée d'une phase aqueuse continue comprenant des composants protéiniques et un agent épaississant, ainsi qu'une phase grasse comprenant une matière grasse végétale, la quantité de matière grasse allant de 5 à 35% en poids, ramenée au poids total du produit, et le cas échéant un agent émulsifiant, dans laquelle la quantité de protéine se situe dans la plage de 0,1 à 10% en poids, **caractérisée en ce qu'**au moins une partie des protéines est dérivée du babeurre et du lait écrémé, la quantité de protéines dérivées du lait écrémé se situant dans la plage de 10 à 80% en poids, ramenée à la quantité totale de protéines dérivées du babeurre et du lait écrémé, et dans laquelle la crème comprend une matière grasse et du lait écrémé en poudre, le ratio en poids du lait écrémé en poudre sur la matière grasse se situant dans la plage de 1 partie de lait écrémé en poudre pour 10 parties de matière grasse jusqu'à 5 parties de lait écrémé en poudre pour 10 parties de matière grasse.

2. Crème non laitière selon la revendication 1, dans laquelle le ratio en poids du lait écrémé en poudre sur la matière grasse se situe dans la plage de 2:10 à 5:10.

3. Crème non laitière selon l'une quelconque des revendications 1 à 2 comprenant une protéine de babeurre, une protéine de lait écrémé et une protéine de petit lait.

4. Crème non laitière selon l'une quelconque des revendications 1 à 3, dans laquelle la protéine est dérivée de lait écrémé en poudre et de poudre de babeurre.

5. Crème non laitière selon l'une quelconque des revendications 1 à 4, dans laquelle l'agent épaississant est choisi dans le groupe comprenant la gomme de guar, la gomme de caroube, le carraghénane, l'alginate, la pectine, la gomme de tara, la gomme de xanthane, des amidons, la méthylcellulose, la carboxyméthylcellulose, ou une combinaison de ceux-ci.

6. Crème non laitière selon l'une quelconque des revendications 1 à 5, dans laquelle la quantité de protéine se situe dans la plage de 2 à 5% en poids, de façon plus préférentielle de 2 à 4% en poids.

7. Crème non laitière selon l'une quelconque des revendications 1 à 6, dans laquelle la quantité de protéine de lait écrémé est d'au moins 0,6% en poids, ramenée au poids total du produit, de préférence de 0,7 à 3% en poids.

8. Crème non laitière selon l'une quelconque des revendications 1 à 7, dans laquelle la source de protéine de lait écrémé est un lait écrémé en poudre et la source de protéine de babeurre est de la poudre de babeurre et dans laquelle la crème comprend un agent épaississant qui est un biopolymère, de préférence une pectine.
